(19) Europäisches Patentamt
European Patent Office
Office européen des brevets

(11) **EP 1 649 244 B1**

(12) **EUROPEAN PATENT SPECIFICATION**

(45) Date of publication and mention
of the grant of the patent:
**22.10.2014 Bulletin 2014/43**

(21) Application number: **04777419.5**

(22) Date of filing: **29.06.2004**

(51) Int Cl.:
*G01J 1/42* (2006.01)     *G02B 9/02* (2006.01)

(86) International application number:
**PCT/US2004/021259**

(87) International publication number:
**WO 2005/008295 (27.01.2005 Gazette 2005/04)**

(54) **OPTICAL BANDWIDTH METER FOR VERY NARROW BANDWIDTH LASER EMITTED LIGHT**

OPTISCHER BANDBREITENMESSER FÜR VON EINEM LASER MIT SEHR SCHMALER BANDBREITE EMITTIERTES LICHT

APPAREIL DE MESURE OPTIQUE DE LARGEUR DE BANDE POUR LUMIERE LASER A LARGEUR DE BANDE TRES ETROITE

(84) Designated Contracting States:
**NL**

(30) Priority: **07.07.2003 US 615321**

(43) Date of publication of application:
**26.04.2006 Bulletin 2006/17**

(73) Proprietor: **Cymer, Inc.**
**San Diego, CA 92127 (US)**

(72) Inventor: **RAFAC, Robert, J.**
**Carlsbad, CA 92009 (US)**

(74) Representative: **Grünecker, Kinkeldey,**
**Stockmair & Schwanhäusser**
**Leopoldstrasse 4**
**80802 München (DE)**

(56) References cited:
**US-A- 5 970 076     US-B1- 6 317 448**
**US-B2- 6 580 517**

**Description**

**RELATED APPLICATION**

This application is related to an application entitled METHOD AND APPARATUS FOR MEASURING BANDWIDTH OF AN OPTICAL OUTPUT OF A LASER assigned to the assignee of the present application and filed on the same day as this application (Attorney Docket No. 2003-0056-01).

**FIELD OF THE INVENTION**

The present invention relates to the detection of laser emitted light bandwidth for lasers emitting light at very narrow bandwidths, e.g., sub-pico-meter bandwidths with error tolerances of hundredths of pico-meters and below. More generally the present invention relates to the accurate estimation of the bandwidth of an optical source using, e.g., interferometric or dispersive instruments ("spectrometers") whose impulse response functions have bandwidth generally comparable to or larger than that of the source being measured.

**BACKGROUND OF THE INVENTION**

Spectrometers are well known for use in the measurement of both wavelength and bandwidth of light sources, e.g., lasers. The output of such a bandwidth meter for example is actually the result of measurement, e.g., utilizing a photo diode array ("PDA") as is well known in the art to measure, e.g., the bandwidth of an output from the spectrometer optics, which is actually a convolution of the actual bandwidth of the light spectrum input into the bandwidth meter (the actual bandwidth to be measured) and the response function of the bandwidth meter. The bandwidth meter has its own response function that modifies the spectrum being measured during the measurement of the bandwidth.

If this were process could be accurately represented as the mathematical convolution of two analytic Gaussian or two analytic Lorentzian spectra, the bandwidth of the laser light could be determined from the response of the meter with simple algebraic equations. However, the output spectra of most lasers are not in such simple analytical form nor are the response functions of, e.g., optical dispersive bandwidth detecting instruments, e.g., etalons.

The spectrometer optics, particularly an optical interferometer, e.g., an etalon, as a finite fmesse or "Q" which is calculated by the formula $f = (\pi\ r^{1/2})/1-r$, where r is the reflectivity of the juxtaposed partially reflective mirrors within the etalon. Etalons have a property also of a free spectral range ("FSR") which is found by the equation $FSR = \lambda^2/2*n*d$, where $\lambda$ is wavelength, n is the index of refraction of the material separating the juxtaposed reflective surfaces of the partially reflective mirrors and d is distance between the two. A factor known as Etalon Resolution ("ER"), in bandwidth, is found by the equation ER = FRS/finesse. A reasonable approximation, but not an exact representation of this is a Lorentzian shaped curve. Currently in bandwidth meters, e.g., for lasers, e.g., with bandwidth in the picometer range the error can usually be dealt with a an offset or delta function using some calibration constant because the bandpass of, e.g., an etalon being used in the bandwidth meter is relatively much broader than the bandwidth of the laser output being measured.

However, as the requirements for more narrow critical dimension line features on, e.g. Ultra-Large-Scale-Integration ("ULSI") integrated circuit fabrication are ever increasing (decreasing critical dimensions), the demand for pure laser light at a particular very narrow wavelength (Deep Ultraviolet - "DUV" and Extreme Ultraviolet - "EUV") and with purity defmed by very narrowly controlled bandwidth around the center wavelength, the etalons used for such measurements are becoming much closer in response function to the bandwidth of the laser light itself, the traditional delta function no longer applies. For, example on a recently released product of Cymer, Inc., the owner by assignment of the present application, the XLA 100, an on-board bandwidth meter utilized an etalon with a bandpass of about 0.12 pm and the laser provided an output generally between about 0.1 pm and 0.18 pm, discounting bandwidth resonance. The convolution then distorts the measured laser light, e.g., in bandwidth, in ways that now make or will soon make measurements of, e.g., the full width half maximum ("FWHM") insufficiently accurate for proper input into controllers used to modify the operation of the laser as the wavelength and/or bandwidth move away from desired targets or out f desired ranges. This is in part at least due to bleed in of energy from the laser light being measured into the etalon output spectrum. This bleeding problem can be even more exaggerated when it is the bandpass of the etalon that is broader than the bandwidth of the measured input light and both are close in value, since the causes the bandpass of the etalon to be even more influenced (distorted) by the measured laser light spectrum.

Currently the output of the bandwidth meter used as an indication of the bandwidth of the measured laser light bandwidth is, e.g., a measure of a fringe width, e.g., at FWHM of a fringe produced by the etalon optics less some constant error value, e.g., ER, otherwise known as Etalon Correction ("EC"). As noted, however, this is not exact unless the distribution of the output of the etalon is Lorentzian, which it is not.

To exacerbate the problem, even if initially measurements could be made of ER that were satisfactory to keep a bandwidth meter on a given laser system within specs when initially manufactured, it has been found that etalons change over live as laser bandwidth meter optics, that the variable conditions of the operation of the laser over life influence the actual ER, and further, when spares are at issue, the bandwidth meter cannot be calibrated at the factory with the same laser that it will become the bandwidth meter for in the field, and the calibrating system is to bid and to sensitive to be moving around to customer sites to fit the bandwidth meter to the customer laser and to expensive to maintain one at each customer site.

If that were not enough, there is a growing belief in the industry, e.g., for semiconductor manufacturing at sub-0.1 micron line width manufacturing that the real measure of bandwidth for proper control of purity is, e.g., E95, which is a measure of the integrated energy within the laser output spectrum that constituted some percentage, in this case 95% for E95 of the total energy in the spectrum, limited by some finite boundary on the roll off of the energy on either side of the peak(s) to zero at +/- infinity, typically about 10pm.

Applicant has also discovered that there is a variation of FWHM and E95 dependant upon the duty cycle at which a pulsed laser is driven which too large to be accounted for at initial calibration within ER for sub-pm lasers and also varies laser to laser and over laser life.

Bandwidth detectors (wave meters), e.g., spectrometers based on, e.g., dispersive optical elements or optical interference phenomena are well-known instruments commonly applied for the measurement of absolute wavelength and bandwidth of light sources. When employed as a bandwidth-measuring tool ("bandwidth detector/meter"), the effect of the finite impulse response of the spectrometer must be considered in determining the bandwidth of the source being measured. For the purpose of this application, "bandwidth" may refer to any number of metrics or mathematical constructions, such as full-width of the spectrum at half-maximum intensity ("FWHM"), full width at some other percentage of the maximum ("FWXM"), width of 95%-enclosed intensity integral ("I95%" or "E95%"), or some other percentage of the energy enclosed in the spectrum portion ("IX%" or "EX%"), etc. An accurate knowledge of the bandwidth of an optical source is very important for many scientific and industrial applications, for example in spectroscopy of liquids or gases, critical dimension control in semiconductor photolithography, etc.

In very simple cases, for example when the spectrum of the source and the spectrometer impulse response are accurately represented both by analytic Gaussian or both by analytic Lorentzian functions, the effect of the spectrometer impulse response can be easily accounted for using simple algebraic equations for most bandwidth metrics. The output spectra of most optical sources, e.g. lasers, do not, however, have such a simple form, and the impulse response of the spectrometer may be similarly complex and/or unknown, or may vary over time or in varying operating environments. Further, the detailed shape of the spectrum of the optical source itself may change over time or with changing operating conditions.

A common method employed to surmount these obstacles is to employ a spectrometer whose impulse response has a bandwidth so narrow in comparison to the expected bandwidth of the source to be measured that in the convolution of the spectrum being measured and the impulse response f the bandwidth detector optics, the influence of the bandwidth detector optics may be considered to be negligible. That is, the spectrometer impulse response may be approximated by a simple mathematical delta-function. However, it is not always practical or even possible to obtain a spectrometer with such a narrow-bandwidth impulse response, particularly when it must be narrow in comparison to a source such as a laser which itself may be extremely narrow (tens of femtometers or less on a wavelength scale).

A second somewhat more sophisticated method commonly used approximates the spectrometer impulse response function and the source spectrum with analytic functions (e.g. of a Lorentzian, Gaussian, or mixed type) for which the effects of convolution within the spectrometer can be expressed in simple mathematical terms. As noted above, this is not necessarily a good approximation, and often fails or becomes very difficult to implement dependably for certain types of bandwidth metrics. Calculation of integral bandwidth metrics such as I95% can be inaccurate or very computationally intensive using this technique.

As an illustration of second method and its shortcomings, a recently released product of the assignee of the present application, the XLA-100, contains an onboard bandwidth meter employing a single etalon with a FWHM bandpass of about 0.12 picometer (pm) that is used to interrogate the output of a deep-ultraviolet excimer laser light source having an average typical FWHM bandwidth of about 0.17 pm. The above approximation is made in which both the laser and the etalon spectrometer are assumed to have an analytic Lorentzian spectral shape; therefore, the FWHM output of the instrument is found mathematically to be simply the sum of the FWHMs of the laser source and the etalon spectrometer impulse response. In this approximation, then, the laser bandwidth is estimated by the FWHM output of the instrument, minus the FWHM of the etalon spectrometer impulse response (determined in independent measurements). However, because the ratio of the FWHM bandwidths of the source spectrum and impulse response function is close to unity, this method may lose accuracy in the event that the shape of the laser spectrum deviates too far from an approximately-Lorentizian shape. For example, a narrowing of the central spectral peak of the source spectrum with a concomitant increase in energy in the near wings of the actual laser spectrum can result in an over-estimation of the FWHM bandwidth in this approximation.

In addition, if the detailed shape of the laser spectrum is constant, the offset subtracted in this example may be adjusted to compensate. However, if the shape of the laser spectrum changes, e.g., with operating conditions, with system alignment, or over the lifetime of the product, even this compensation will not remain accurate. Also at issues is the complicating possibility that in a manufacturing setting, the etalon spectrometer may be tested and offset-calibrated on one laser, but is ultimately installed on another that has a slightly different spectral shape, e.g., as a replacement part. In this case the calibration itself may be in error. Other bandwidth meters are disclosed in US5970076, US6317448 and US6580517.

There is a need, therefore for a sub-pm (approaching femto-meter "fm") bandwidth meter that can be calibrated in such a way as to be portable laser to laser and to respond to laser property changes and laser operation changes, including over the lifetime of the laser. The need exists to provide for more accurate measurement, e.g., through estimation of the enclosed energy parameters, e.g., E95%, which are increasingly being demanded by users f the highly pure light produced, e.g., by lasers as described above. In order to support very high pulse repetition rates and pulse to pulse corrections the need must also be satisfied with a solution that is computationally simple to execute, i.e., requiring a minimal number of instructions and thus computation time in cycles of whatever processor is utilized.

## SUMMARY OF THE INVENTION

A method and apparatus for measuring bandwidth of light emitted from a laser according to the present invention is described according to claims 9 and 1, respectively.

## BRIEF DESCRIPTION OF THE DRAWINGS

Fig. 1 shows a representative example of a three dimensional plot of the response of a laser bandwidth meter of the prior art to laser light varying by known amounts in FWHM and E95, as measured by a calibrating source of laser light which is relatively precisely adjustable in FWHM and E95 utilizing a constant ER;

Fig. 2 shows a representative plot of the type shown in Fig. 1 for a bandwidth meter according to the present invention having, e.g., an etalon that is relatively more sensitive to change in FWHM than to change in E95;

Fig. 3 shows a representative plot of the type shown in Fig. 1 for a bandwidth meter according to the present invention having, e.g., an etalon that is relatively more sensitive to change in E95 than to FWHM;

Fig. 4, there is shown a schematic block diagram of a bandwidth meter 10 according go an embodiment of the present invention.

Fig. 5 shows a plot indicating the superior tracking of actual bandwidth utilizing the present invention;

Fig. 6 shows the superiority of the tracking error utilizing the present invention;

Fig. 7 illustrates the simulated tracking of E95 utilizing a bandwidth meter made according to an embodiment of the present invention;

Fig. 8 illustrates the tracking error of a simulated bandwidth meter made according to an embodiment of the present invention;

Fig. 9 shows a normalized convolved fringe-width excess output for various input spectra

Fig. 10 shows a plane approximation of the simulated etalon outputs shown in Fig. 9.

## DETAILED DESCRIPTION OF PREFERRED EMBODIMENTS

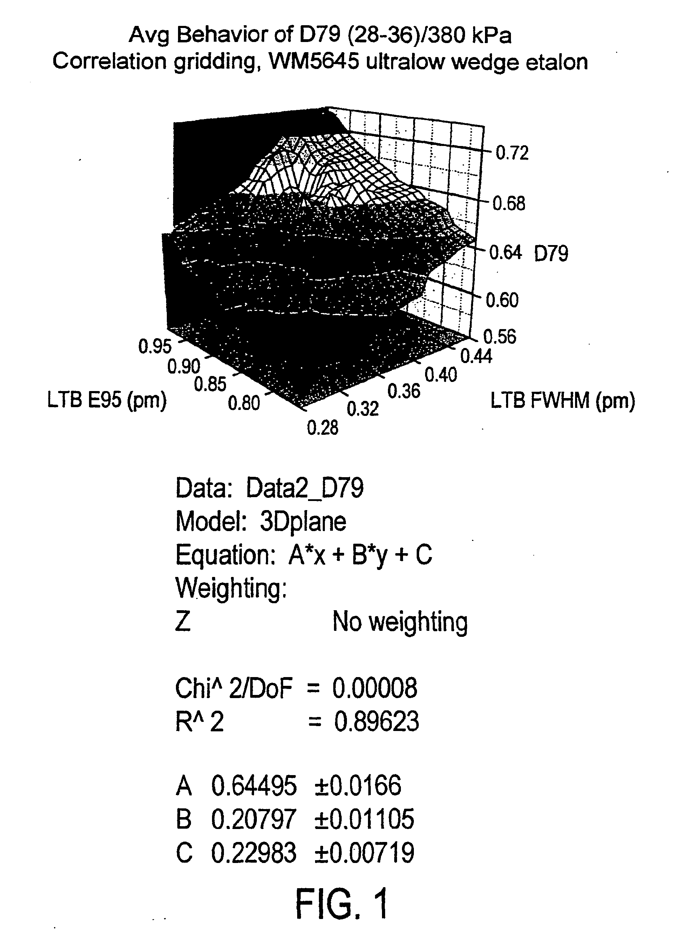

Turning now to Fig. 1 three is shown a three dimensional plot of the response of a bandwidth meter (wave meter) having, e.g., an ultra low wedge etalon, e.g., as made by manufactured by Coherant, and utilizing the prior art correction ER, as the values of FWHM and E95 are varied as measured utilizing a very accurate spectrometer, e.g., a grating spectrometer, e.g. as manufactured by Laser Technik Brelin ("LTB").

It can bee seen that the etalon wave meter using the prior art ER exhibits roughly the same response to both E95 and to FWHM, both in pico-meters. The illustrated correlation gridding response when smoothed out by any of a number of well known fitting techniques, such as the Levenburg Marquardt multivariable minimization algorithm, exhibits a response function $A*x + B*y + C$ with $A = 0.64495 \pm 0.0166$, and $B = 0.20797 \pm 0.01105$ and $C = 0.22983 \pm 0.00719$, of which in the prior art the A term representative of change in FWHM and the C term representative of some constant offset are utilized in setting ER for any given wave meter at the factory during the calibration process in manufacturing. The B term is not entirely ignored, but is averaged and incorporated into the constant C.

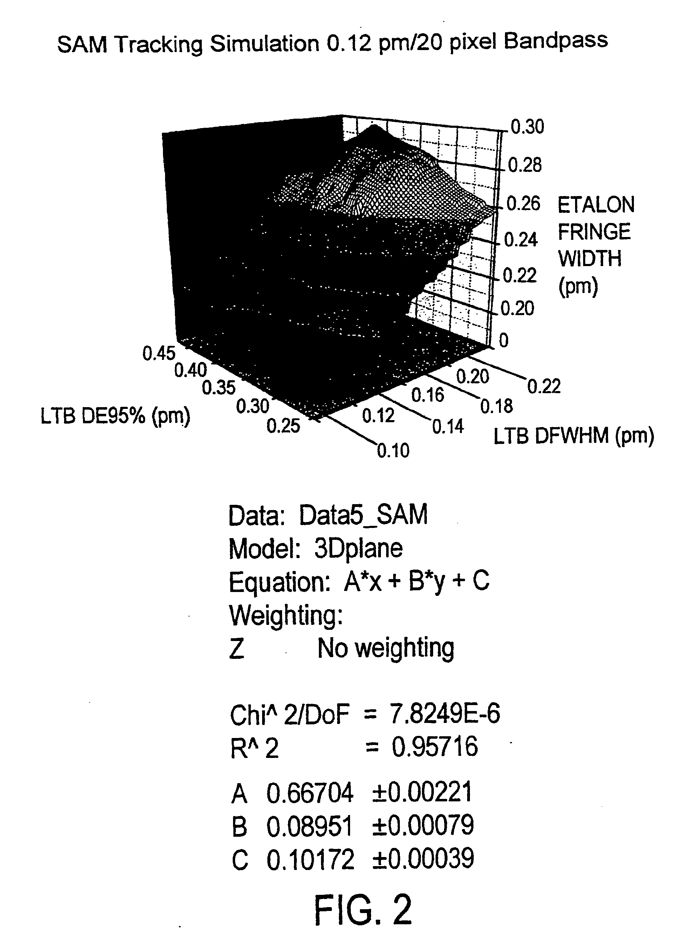

Turning now to Fig. 2 three is shown a three dimensional plot of a simulated bandwidth meter (wave meter) that utilizes, e.g., an optical bandwidth measuring device, e.g., an interferometer, e.g. and etalon interferometer, which, e.g., detects bandwidth of the input laser light by detecting the FWHM of a fringe created by the etalon projected optically onto an array of photo-diodes ("PDA"). The response indicates that the bandwidth meter is relatively more sensitive to change in FWHM than to change in E95. The response equation derived from the smoothed out plot shown in Fig. 2 results in A = 0.66704 ± 0.00221 and B = 0.8951 ± 0.00079 and C = 0.10172 ± 0.00039.

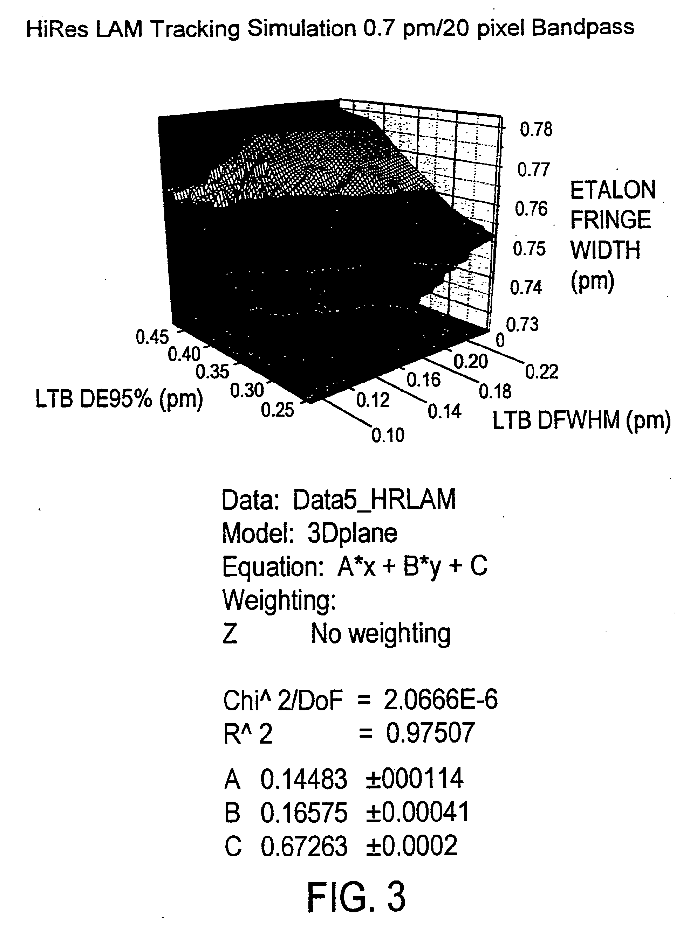

Turning now to Fig. 3 there is shown a thee dimensional plot of a simulated bandwidth meter (wave meter) that utilizes, e.g., an optical bandwidth measuring device, e.g., an interferometer, e.g. and etalon interferometer, which, e.g., detects bandwidth of the input laser light by detecting the FWHM of a fringe created by the etalon projected optically onto an array of photo-diodes ("PDA"). The simulation utilizes a 0.7 pm/20 pixel bandpass. The response indicates that the bandwidth meter is relatively more sensitive to change in E95 than to FWHM. The response equation derived from the smoothed out plot shown in Fig. 3 results in A = 0.14483 ± 0.00114 and B = 0.16575 ± 00041 and C = 0.67263 ± 0.0002.

Applicant has discovered that taking two such response plots for each of two different bandwidth meters, e.g., one relatively more sensitive to change in E95 and one relatively more sensitive to change in FWHM, i.e., with different finesse in the case of bandwidth meters employing etalon optics to measure the bandwidth, and using the second values of A, B and C, noted above as D, E and F in two separate linear equations:

(first output, e.g., etalon 1 fringe width value) = (a * (calibrating input light known value of the full width at some percent of the maximum within the full width of the spectrum, e.g., FWXM)) + (b* (calibrating input light known value of the width between two points on the spectrum defining a content of the spectrum containing some percentage of the energy of the full spectrum, e.g., EX) +c; and

(second output, e.g., etalon 2 fringe width value) = (a * (calibrating input light known value of the full width at some percent of the maximum within the full width of the spectrum, e.g., FWXM)) + (b* (calibrating input light known value of the width between two points on the spectrum defining a content of the spectrum containing some percentage of the energy of the full spectrum, e.g., EX) +c; then the actual bandwidth calculation apparatus can be programmed to solve the derived equation:

$$(\text{first actual bandwidth parameter, e.g., FWXM}) = ((b * (\text{second output, e.g., etalon 2 fringe width value})) - (e * (\text{first output, e.g., etalon 1 fringe width value})) + ce - bf) / (bd - ae),$$

or the equation:

$$(\text{second actual bandwidth parameter, e.g., EX}) = ((a * (\text{second output, e.g., etalon 2 fringe width value})) - (d * (\text{first output, e.g., etalon 1 fringe width value})) + cd - af) / (ae - bd).$$

In the more specific case where FWXM is the FWHM value and EX is E95 and X is the output of the first etalon PDA and X' is the output of the second etalon PDA, then X = a*FWHM + b*E95 +c and X' = d*FWHM + e* E95 + f, and therefore:

$$FWHM = (b*X' - e*X + ce - bf) / (bd - ae),$$

and

$$E95 = (a*X' - d*X + cd - af) / (ae - bd)$$

Therefore, each of the bandwidth meters can be calibrated at the factory at time of manufacture and combined into a bandwidth meter, e.g., to operate in parallel and the controller, discussed below, can be programmed to utilize he two outputs with the previously determined calibration values for each bandwidth meter, e.g., a - f, and the two outputs measuring the bandwidth of the same laser output to solve for either or both of FWXM and EX. That is, full width at some percent of the maximum, e.g., FWHM or FW75%M, and/or EX, i.e., the width of the spectrum within which some percentage of the total energy is contained, e.g., E95% ("E95") or E97% or E93%, can be solved for by storing the respective coefficients n memory available to the processor and providing to the processor actual outputs from the respective bandwidth meters, e.g., etalons during actual laser operation measuring the light output in the two respective etalons in parallel to provide the inputs to the controller. It will be understood that if other than the current standard FWHM and/or E95 is to be measured and calibrated for at the factory then such other value(s) will be the ones against which the output, e.g., etalon fringe measurement, will be plotted as discussed above to derive the values of a - f.

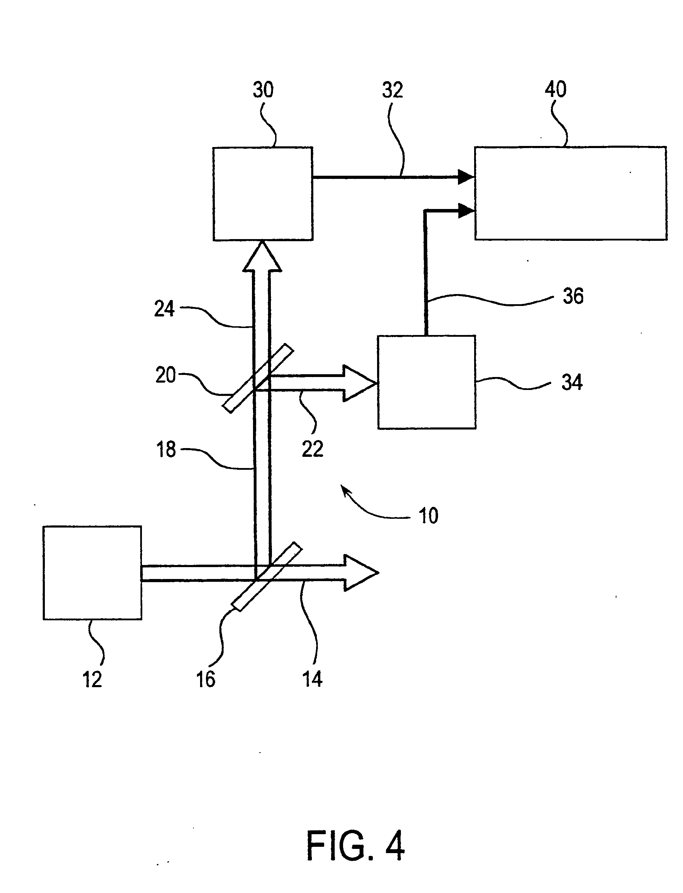

Turning now to Fig. 4, there is shown a schematic block diagram of a bandwidth meter 10 according go an embodiment of the present invention. The bandwidth meter 10 may be set up to measure the bandwidth of a light beam 14 produced by a laser, e.g., a high pulse power excimer laser, e.g., an ArF MOPA dual chambered laser producing light at a nominal wavelength of 193.350 nm and a bandwidth of less than 0.3 pm and bandwidth accuracy requirement of $\pm$ 0.02 pm. The laser light beam 14, which may, e.g., be utilized as the light source for, e.g., exposing photoresist through a reticle (mask work) in sub-micron fabrication of integrated circuits, micromachines, nano-technologies, or the like ("photolithography") may be split, e.g., in a beam splitter 16 which can be set to pass most of the beam 14 and reflect a small portion, e.g., less than 1% in beam 18 which can pass through a second beam splitter 20 which may be set to reflect and pass essentially identical amounts of the beam 18 in a reflected beam 22 and a passed beam 24, each of which enter a respective bandwidth meter 30, 34. The bandwidth meters 30, 34 may include an optical bandwidth measuring apparatus, e.g., an etalon for creating fringes that are indicative of the bandwidth of the light measured and an electrical circuit (not shown) e.g., a PDA for providing an analog or digital input to a controller 40 which may, e.g., be representative of the measurement of, e.g., the fringe created by, e.g., the etalon. The etalon 30 may, e.g., be selected to have nominal bandpass values of, e.g., 0.12 pm FWHM, a free spectral range of, e.g., 3pm at 193.36, for an ArF laser bandwidth measurement, and an effective finesse of $\geq$ 25, e.g., over a 10mm aperture, and a peak transmission (ration f the fringe peak photo-electrical signal and the input peak signal) of $\geq$ 50% at 193.350 nm normal incidence. The etalon 34 may be selected to have nominal bandpass values of, e.g., 0.7 pm FWHM a free spectral range of, e.g., 20 pm at 193.36, for an ArF laser bandwidth measurement, and an effective finesse of $\geq$ 29, e.g., over a _mm aperture, and a peak transmission (ration f the fringe peak photo-electrical signal and the input peak signal) of $\geq$ _% at 193.350 nm normal incidence.

It will be understood that this type of calibration can be employed with other bandwidth measurement instruments that are susceptible to the same or similar kinds of frequency dependent response issues.

It will be understood from the above that applicant has create an optical bandwidth measuring apparatus consisting of parallel measurements of a beam of light, e.g., output from a laser at very small wavelengths and very narrow bandwidths, using e.g., two etalons of significantly differing bandpass. The two arms of the bandwidth measuring apparatus which exhibit differential sensitivity to the energy content of the wings or skirts of the spectrum being measured. The output of each of the two parallel bandwidth measuring apparatus, e.g., the FWHM values of fringes created by each respective etalon provide approximate solutions to a system of simultaneous bilinear equations that can be inverted to find a good approximation of the actual FWHM and E95% widths of the laser light being measured. The gradient of the plane, e.g., shown in Fig. 3 along the E95 axis is very sensitive to the etalon wedge, i.e., to the finesse (i.e., bandpass). Similarly the FWHM slope in Fig. 2 is larger due to the bandpass of the second etalon.

Data taken for the measurements and simulations illustrated, e.g., in Fig.'s 1 - 3 measured the FWHM and E95% with a very sensitive and highly calibrated wave meter, e.g., a grating spectrometer, e.g., as made by Laser Technik Berlin, and plots of these were made against the output of, e.g., each respective etalon measuring light from, e.g., a 7000A excimer laser and/or an XLA-100 excimer laser, each of which are products of the assignee of the present application, for sets of resonance scans with a variety of fills. Applicant collected a large sample of spectra, e.g., from an XLA-100 during pilot manufacture and obtained an approximate actual laser spectra by deconvolving using Fourier methods and calculated a response of a theoretical etalon circuit, choosing the nominal bandpass values for one etalon of 0.7 pm FWHM, 20 pm FSR and F=29 and for the second etalon 0.12 pm FWHM, 3 pm FSR and F= 25. Also simulated was a line center analysis module ("LAM") as appears in the assignees products, utilizing an etalon wave meter, but with a higher resolution imaging system to avoid pixel aliasing, i.e., having the same resolution of the other etalon, e.g., on like that appearing in the assignee's products in a spectral analysis module ("SAM"), i.e., ~ 20 pixels in FWHM rather than the - 4 in current LAMs.

Applicant discovered that the behavior of the output of an etalon could be reasonably approximated by a plane surface resulting from the three dimensional plot. From wave meter to wave meter, however, applicant also discovered that the slope of the plot on the E95 axis was sensitive to etalon wedge (finesse). From this applicant concluded that the simultaneous equations noted above could be used with, e.g., two etalons of very different bandpass to calibrate a wave meter using parallel measurements of the bandwidth and provide a bandwidth measuring apparatus employing the precalculated calibration coefficients and the separate outputs of the two parallel wave meters, e.g., etalons with the coefficients to solve for the two unknown variables, either FWHM or E95. The two outputs, e.g., from the two etalons are connected by a linear transformation, using the precalculated coefficients, to the real FWHM and E95 values. An etalon with a narrower bandpass showed a very much larger slope in the FWHM axis that the one with the narrower bandpass, which in turn was more sensitive on the E95 axis, as shown in Fig. 3, with most of the sensitivity appearing in the constant C in the equation, reflecting the relatively broader bandpass spectrum of this second etalon.

According to the disclosed embodiment of the present invention tracking of bandwidth detectors, e.g., using FWHM portability can be improved significantly and E95 metrology on-board a high power high pulse rate narrow bandwidth excimer laser is now possible. Whether or not full width at something other than half maximum, i.e., FWXM is a better measurement and/or an energy of something other than 95% within the spectrum, i.e., EX, is or are more optimal as bandwidth measurements, e.g., for certain applications like delivering very pure light for photolithograpy remains to be seen. In addition the optimal choices for, e.g., the differential in bandpass for the two etalons remains to be determined. However, as discussed below with respect to Fig.'s 9 and 10 this can easily be determined to be a maximum ratio of bandpass to bandpass for each etalon that enables, e.g., the parallel etalon bandwidth detector according to an embodiment of the present invention to function acceptably, e.g., produce an output signal that is of sufficient signal to noise ration to be accurately measured.

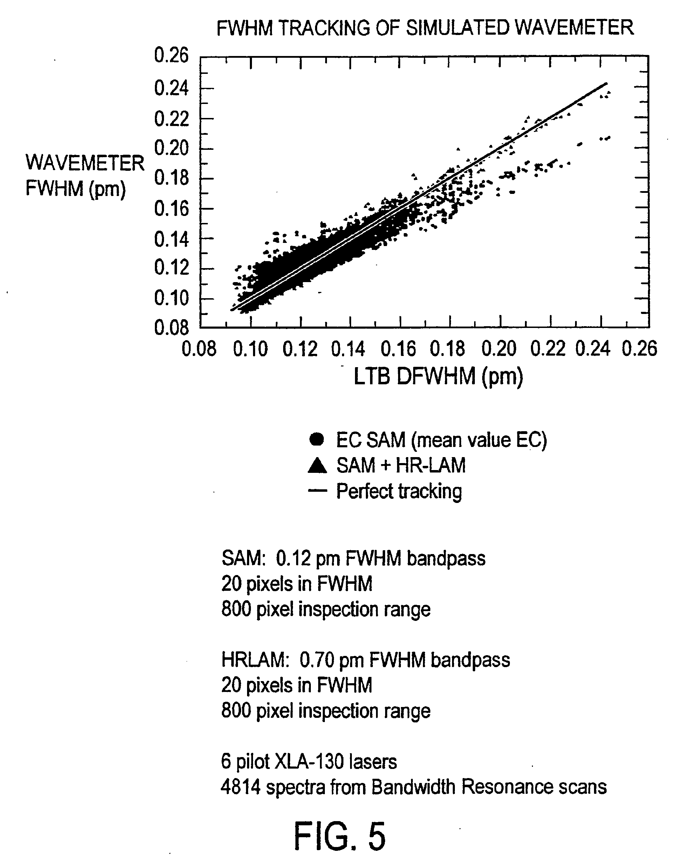

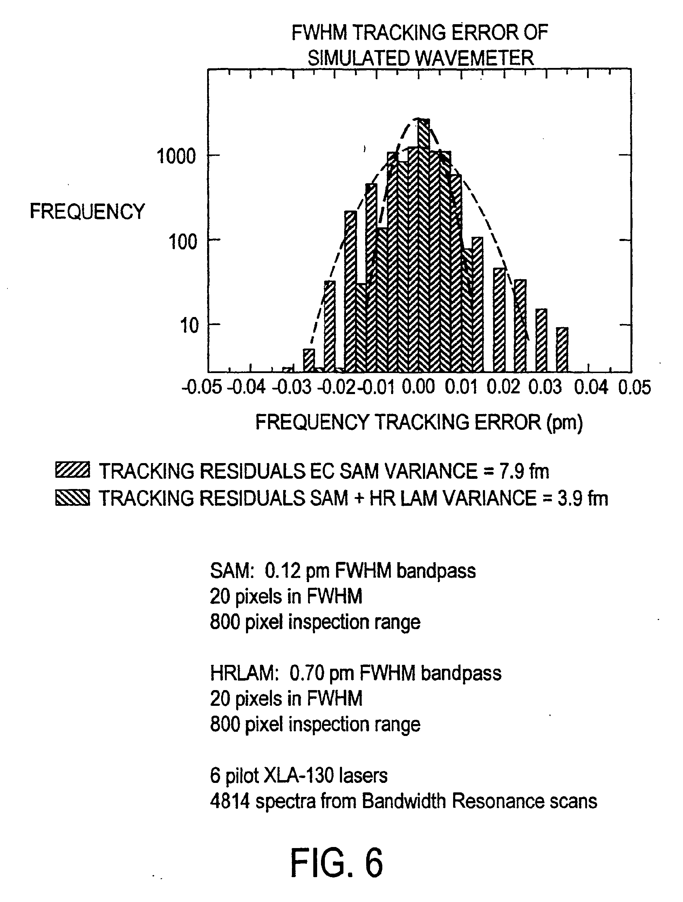

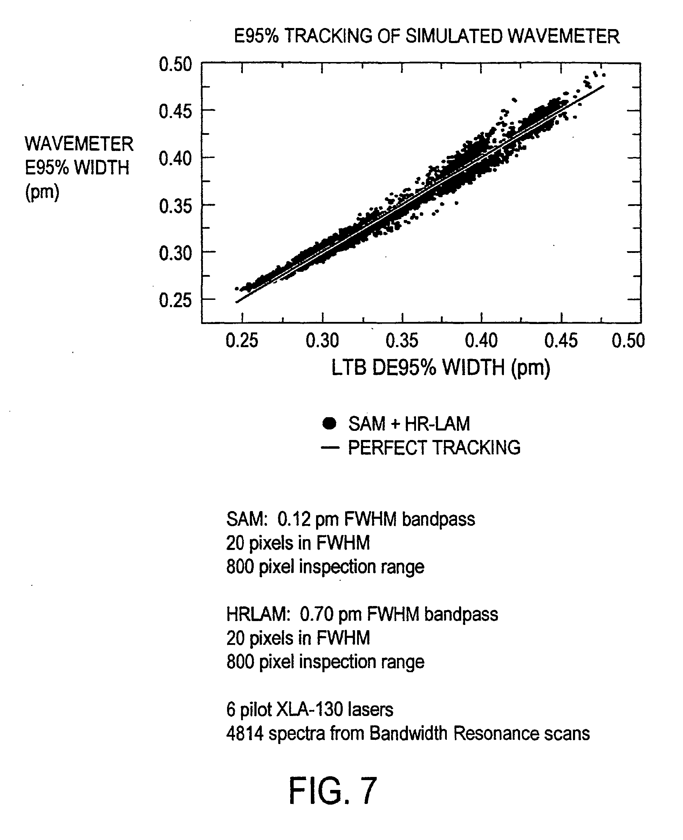

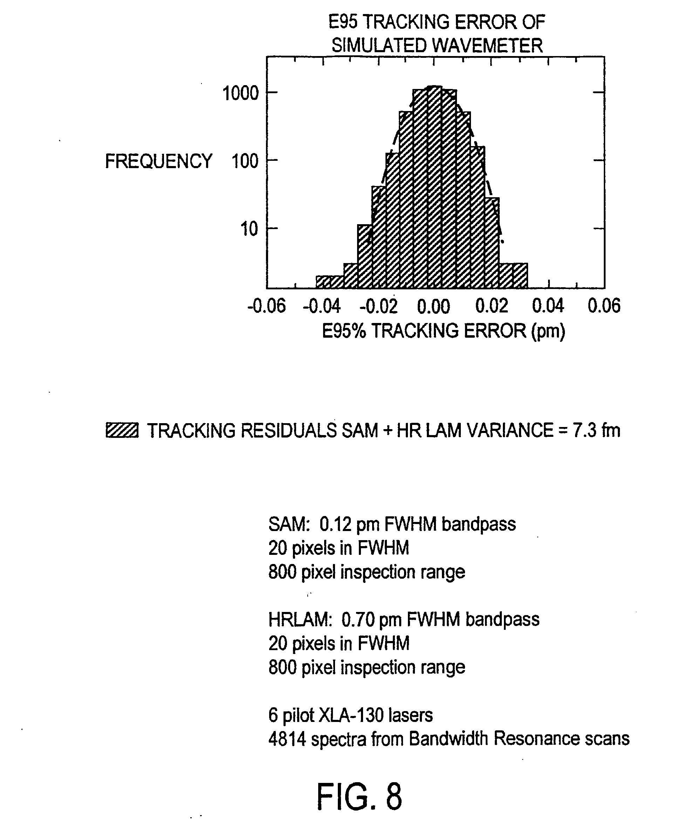

Turning now to Fig. 5 there is shown an illustration of the FWHM tracking capabilities of a simulated wave meter according to an embodiment of the present invention. Turning now to Fig. 6 there is shown an illustration of the FWHM tracking error of the simulated wave meter, showing a much narrower variance around a mean much closer to 0.0 and the avoidance f outliers (way out of spec readings which seem in the current state of bandwidth detection apparatus in use on lasers today to overestimate FWHM when both FWHM and E95 are already large, i.e., when error margin is minimum. Turning now to Fig. 7 three is shown an illustration of the E95% tracking of a simulated bandwidth detection apparatus according to the present invention. Turning now to Fig. 8 there is shown an illustration of E95 tracking error for the simulated bandwidth detection apparatus according to the present invention, measured in the tens of femto-meters.

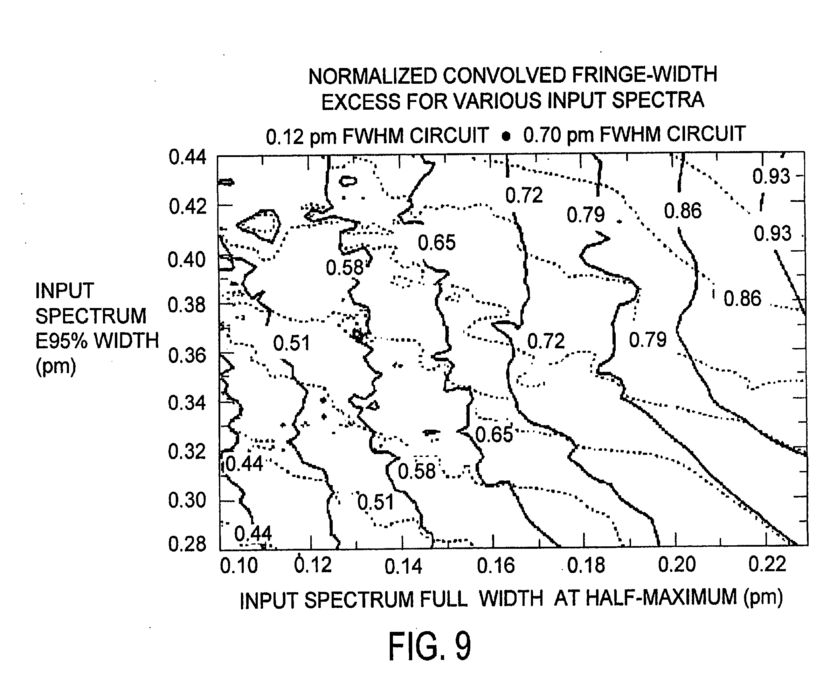

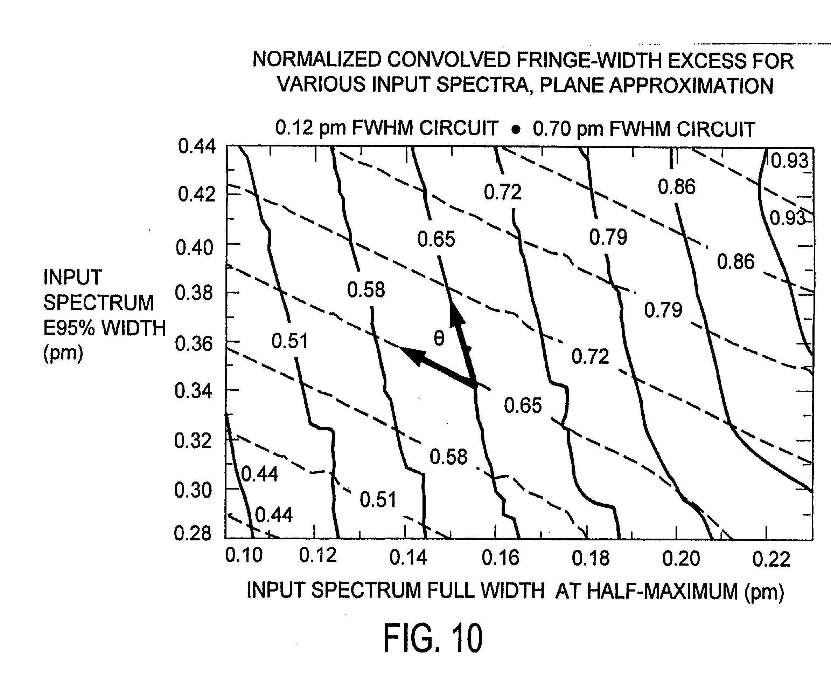

Turning Now to Fig. 9 there is shown a representation of the a normalized convolved fringe-width excess (simulated output of each of the two, e.g., optical bandwidth meters) for various input spectra compared to the actual values of input spectrum FWHM and E95. The solid lines representing the simulated output of the first detector with a relatively narrower bandpass and the dashed lines representing the simulated output of the second detector having a relatively more narrow bandpass. Turning to Fig. 10, there is shown a planarized approximation of the simulated responses shown in Fig. 9. It can be seen in Fig. 10 that the responses of the first and second detectors vary roughly linearly and have differing slopes. Fundamentally, for purposes of an embodiment of the present invention the slopes should form an angle $\theta$ that is as large as possible, recognizing that at some point the angle $\theta$ is so large that the $\Delta$fringe becomes so small relative to the fringe that signal to noise considerations come into play and interfere with the accuracy of the output. That is, e.g., as the broader bandpass measurement is made with a broader and broader bandpass, according to an embodiment of the present invention, the benefits of the present invention increase to some limiting point where the relative difference between the bandpass of each of the two detectors in parallel causes signal to noise ration deterioration of the accuracy of the output.

Normalized fringe-width excess means the amount by which the, e.g., FWHM of the fringe exceeds the FWHM of the impulse response of the etalon spectrometer, divided by the maximum value obtained for all the spectra in the data sample. That is, e.g.:

$$\text{Normalized fringe-width excess} = (\text{FWHM Fringe} - \text{FWHM response function})/(\text{largest of these differences})$$

This metric allows one to compare, e.g., the variation of the two spectrometer channel outputs on the same scale. Fig.'s 9 and 10, therefore, represent the actual output of the simulation. In this simulation, roughly 4,800 actually measured grating-spectrometer spectra from 6 different, lasers, e.g., pilot XLA-100's sold by the assignee f the present application, were deconvolved using the grating spectrometer's measured response function and a Fourier Transform method. The inspection region of each laser spectrum was 16 pm wide. This is sufficient to give a good sample of the actual spectrum of the light one would expect to come out of the lasers. These spectra were then convolved with the response functions of two simulated etalon spectrometers, including the effects of a pixelated detector, e.g., a PDA, etc. The simulated etalon spectrometers had response functions of 0.12 pm FWHM (~3 pm FSR with finesse of 25) and 0.70 pm FWHM (~20 pm FSR with finesse of 28). The data were gridded on a 69x69 matrix using a correlation method with a correlation radius of 4 for the purpose of visualization. How one chooses to grid the data affects its appearance; in the plane approximation (second plot) the lines should be perfectly straight, but they are not. This is an artifact of the gridding method used. One could likely fine tune this to make it work better in producing straighter lines. It is, however, representative of a planarized fitting, sufficient to demonstrate the concept of an embodiment of the present invention.

The term "fitting," mathematically indicates a "parametric modeling" of the fringe width data. Taking the 4,800 data points of the surface measured by the respective etalon spectrometer in simulated response to the different actual input spectra, one tries to model this data with a plane z=ax+by+c. This reduces 4,800 numbers to just 3. Going from Fig. 9 to Fig. 10 one choose, e.g., a merit function that measures the agreement between the actual data to the plane surface (, e.g., a chi-squared statistical function, utilizing,e.g., $\chi^2$/Degree of Freedom ("DoF") and $R^2$, and then minimizing this merit function in the many dimensions to obtain the so-called "best-fit parameters" A, B, and C, using, e.g., the Levenberg-Marquardt method, which is essentially modem standard of nonlinear least-squares optimization routines, well known in the art. Those skilled in the art will understand that utilizing this technique, along with choosing an etalon response function that works with the expected laser spectral variations allows one to make this approximation where thousands of data points can be described by just three parameters. While this may not work for all possible spectral shapes, the applicant has observed that it does work very well for spectra that are relatively symmetric about a central peak.

The apparatus and method according o the described embodiment of the present invention provides overall improved predicted and actual tracking (e.g., - a factor of 2 reduction in FWHM error variance) and reduces the incidence of outliers in tracking error, e.g., due to actual E95 changes in the measured light beam. The present invention also gives greatly improved portability of coefficients between resonance scan calibration and operation with, e.g., variations in gas enrichment and frame-to-frame spectral variability. It also appears to offer a very reasonably accurate on-board E95 tracking (e.g., $\pm$ 0.015pm) utilizing existing technology, e.g., etalons in parallel.

Those skilled in the art will appreciate that an aspect of the disclosed embodiment of the present invention is that the method and apparatus may be applied to calibrate the wave meter to provide a calculated output indicative of one bandwidth parameter, e.g., EX, where the measured parameter is not the same type of parameter, i.e., FWXM, which may be easier to more accurately detect and/or more computationally simple to compute from observable information, e.g., fringe width, e.g., at FWHM, as measured on an array of photo-sensitive diodes ("PDAs") as is well known in the art. In addition according to an embodiment of the present invention the outputs of each of the bandwidth detectors may be in, e.g., FWHM and the output of the entire bandwidth detector may be in FWXM, something other than the width at half of the maximum. Further, the outputs of the two optical bandwidth detectors may be in FWXM, rather than in FWHM according to another embodiment of the present invention.

According to another embodiment of the present invention the calibration coefficients can be determined utilizing, e.g., FWXM and FWX'M, where X and X' are two different percentages of the maximum, e.g., FW75%M and FW25%M, i.e., forming the three dimensional plot as shown, e.g., in Fig. 2 with measurements of LTB DFW75%M on one horizontal axis and LTB DFW25%M on the other, as compared to the etalon fringe width measurement, also at some FWXM (or even EX if that is the response from the etalon to be ultimately utilized in measuring actual incident spectra in use of the bandwidth detector) and still be able to solve for the actual incident spectra FWXM, e.g., FWHM and EX, e.g., E95, provided that the first detector is relatively more sensitive to FWHM than to E95 and the second detector is relatively more sensitive to E95 than to FWHM.

Those skilled in the art will understand that as a generalization of an embodiment of the present invention, $BW_1$ can be considered to be the detected bandwidth as measured by one bandwidth detector and $BW_2$ can be considered to be the detected bandwidth as measured by the second bandwidth detector in parallel. Also $BW_3$ can be considered to be a first bandwidth parameter of the incident beam, e.g., the output of an excimer laser, e.g., a deep ultraviolet ("DUV") laser or an extreme ultraviolet ("EUV") laser that is desired to be measured, and $BW_4$ can be a second such bandwidth parameter of the incident beam that is desired o be measured. According to an embodiment of the present invention then, either $BW_3$ or $BW_4$ may be calculated from the outputs $BW_1$ and $BW_2$ and precalculated coefficients, as described above, provided that the measurement resulting in $BW_1$ is predominantly sensitive to $BW_3$ and only somewhat sensitive to $BW_4$ and the measurement of $BW_1$ is predominantly sensitive to $BW_4$ and only somewhat sensitive to $BW_3$.

It will also be understood that the "actual" bandwidth cannot be precisely measured. Even perfect calibration constant coefficients according to an embodiment of the present invention would have at least the error of the measuring LTB spectrometer, which is small, but finite. Applicant estimates such error to be in the femto-meter range. Therefore the term "actual bandwidth" as used in the specification and claims refers to the bandwidth calculated from the parallel inputs and the precalculated calibration coefficients for each of the two parallel wave meter instruments. This is not "actual" bandwidth, but is much closer than with prior art bandwidth detectors, especially in the ranges discussed above for, e.g., wavelength and bandwidth, where changes, e.g., in the operating E95 and like error producing effects more pronouncedly interfere with the ability to utilize existing wave meters with the necessary degree of confidence of translation of what is measured to the "actual" bandwidth.

Those skilled in the art will appreciate that the apparatus and methods of the present invention includes mathematical approximations and calibration methods that make the apparatus simple to implement using straightforward algebra, and does not require detailed knowledge of the spectral shape of the input source or impulse response functions of the spectrometer(s). Those skilled in the art will also appreciate that a feature of the described embodiment of the present invention is that it is relatively computationally simple, involving simple mathematical operations.

The above described embodiments of the present invention are intended only for explanation and illustration purposes and are not the only embodiments in which the present invention may reside. Those skilled in the art will understand that many modifications and changes may be made to the described embodiments. For example, other bandwidth detection apparatus besides etalons may be utilized to provide the parallel bandwidth measurements for calibrations and incorporation in the calibration equations for determination of the precomputed calibrations coefficients to be employed later with the actual readings from the two bandwidth detection meters in parallel for measurement of actual FWXM and EX. A wide range of differential bandpass values for the two parallel bandwidth detectors may be utilized and certain ranges may prove better for different applications, varying requirements for wavelength, bandwidth, etc. In addition, while the present invention has been explained with an embodiment utilizing two etalon spectrometers and two plane models, it may be possible to implement the invention utilizing, e.g., three or four etalons/spectrometers instead of two, and/or possibly some other kind of modeling different from the plane z=ax+by+c (, e.g., other relatively simple surfaces, e.g., a parabolic surface, depending on what the spectral variations in the source are expected to be what kind of spectrometers are used use.

**Claims**

1. A bandwidth meter (10) for measuring the bandwidth of a spectrum of light (14) emitted from a laser input to the bandwidth meter comprising:

   a first optical bandwidth detector (30) receiving light from the laser, measuring a first fringe full width at a percentage of a maximum intensity of the received light, and providing as a first output the measured first fringe width;
   a second optical bandwidth detector (34) receiving light from the laser, measuring a second fringe full width at a percentage of the maximum intensity of the received light, and providing as a second output the measured second fringe width; and
   an actual bandwidth calculation apparatus (40) that calculates an actual bandwidth parameter by solving a multivariable linear equation that includes the first output and the second output as variables and includes precalculated calibration constants that each depend on either the first optical bandwidth detector or the second optical bandwidth detector, to calculate an actual bandwidth parameter;
   wherein the actual bandwidth parameter includes at least one of a spectrum full width at some percentage of the maximum intensity of the spectrum of light emitted from the laser and a width between two points on the spectrum defining a content of the spectrum containing some percentage of the energy of the full spectrum of the light emitted by the laser.

2. The bandwidth meter of claim 1 wherein:

   the first optical bandwidth detector (30) is an etalon; and
   the second optical bandwidth detector (34) is an etalon.

3. The bandwidth meter of claim 1 wherein: the actual bandwidth parameter includes a first actual bandwidth parameter and a second actual bandwidth parameter;
   wherein the first actual bandwidth parameter is said spectrum full width at some percentage of the maximum intensity of the spectrum of light emitted from the laser;
   the second actual bandwidth parameter is said width between two points on the spectrum defining a content of the spectrum containing some percentage of the energy of the full spectrum of the light emitted by the laser;
   the first optical bandwidth detector is more sensitive to a change in bandwidth measured with the first actual bandwidth parameter than to a change in bandwidth measured with the second actual bandwidth parameter; and
   the second optical bandwidth detector is more sensitive to a change in bandwidth measured with the second actual bandwidth parameter than to a change in bandwidth measured with the first actual bandwidth parameter.

4. The bandwidth meter of claim 3 wherein:

   the precalculated calibration constants are derived from a three dimensional plot representing the first output of the first optical bandwidth detector (30) in relation to a calibrating input light with known values of the first actual bandwidth parameter and of the second actual bandwidth parameter, and from a three dimensional plot representing the second output of the second optical bandwidth detector (34) in relation to a calibrating input light with known values of the first actual bandwidth parameter and of the second actual bandwidth parameter.

5. The bandwidth meter of claim 4 wherein:

   the first three dimensional plot provides the solution:

the first output = (a\*the known value of the first actual bandwidth parameter taken with the first optical bandwidth detector for the calibrating input light) + (b\*the known value of the second actual bandwidth parameter taken with the first optical bandwidth detector for the calibrating input light) + c;

and
the second three dimensional plot provides the solution:

the second output = (d\*the known value of the first actual bandwidth parameter taken with the second optical bandwidth detector for the calibrating input light) + (e\*the known value of the second actual bandwidth parameter taken with the second optical bandwidth detector for the calibrating input light) + f;

and
the actual bandwidth calculation apparatus calculates an actual bandwidth parameter using either of the following derived equations:

the first actual bandwidth parameter = ((b \* (second output)) − (e \* (first output)) + ce − bf) / (bd − ae),

or:

the second actual bandwidth parameter = ((a \* (second output)) − (d \* (first output)) + cd − af) / (ae − bd);

wherein a,b,c,d,e and f represent the precalculated calibration constants.

6. The bandwidth meter of claim 5 wherein:

the known value of the first actual bandwidth parameter is a spectrum full width at half maximum intensity of the spectrum of the calibrating input light; and
the known value of the second actual bandwidth parameter is a width between two points on the spectrum containing 95% of the energy of the spectrum of the calibrating input light.

7. A photolithography light source comprising:

a laser light source; and
a bandwidth meter (10) according to any of claims 1-6, the bandwidth meter (10) being arranged for measuring the bandwidth of a spectrum of light (14) emitted from said laser light source.

8. The light source of claim 7, wherein the bandwidth meter (10) comprises the features defined in claim 9, the light source further comprising:

the transfer function of the first optical bandwidth detector (30) is selected to be much more sensitive to a spectrum full width at some percent of the maximum than to a portion containing some percentage of the energy and the transfer function of the second optical bandwidth detector (34) is selected to be much more sensitive to a portion containing some percentage of the energy than to a spectrum full width at same percent of the maximum.

9. A bandwidth measuring method for measuring the bandwidth of a spectrum of light emitted from a laser, method comprising:

receiving light from the laser at a first optical bandwidth detector (30) that has a first impulse response;

measuring at the first optical bandwidth detector a first fringe full width at a percentage of a maximum intensity of a spectrum of the received light;

providing as a first output the measured first fringe full width at the percentage of the maximum intensity from the first optical bandwidth detector;

receiving light from the laser at a second optical bandwidth detector (34) that has a second impulse response;

measuring at the second optical bandwidth detector a second fringe full width at a percentage of the maximum intensity of the spectrum of the received light;

providing as a second output the measured second fringe full width at the percentage of the maximum intensity from the second optical bandwidth detector;

receiving the first output and the second output;

receiving precalculated calibration constants that depend on either the first optical bandwidth detector or the second optical bandwidth detector; and

utilizing an actual bandwidth calculation device (40), calculating an actual bandwidth parameter by solving a multivariable linear equation that includes the first output and the second output as variables and includes the precalculated calibration constants;

wherein the actual bandwidth parameter includes at least one of a spectrum full width at some percentage of the maximum intensity of the spectrum of light emitted from the laser and a width between two points on the spectrum defining a content of the spectrum containing some percentage of the energy of the full spectrum of the light emitted by the laser.

10. The method of claim 9 wherein:

the actual bandwidth parameter includes a first actual bandwidth parameter and a second actual bandwidth parameter;

wherein the first actual bandwidth parameter is said spectrum full width at some percentage of the maximum intensity of the spectrum of light emitted from the laser;

the second actual bandwidth parameter is said width between two points on the spectrum defining a content of the spectrum containing some percentage of the energy of the full spectrum of the light emitted by the laser;

the first impulse response of the first optical bandwidth detector is more sensitive to a change in bandwidth measured by the first optical bandwidth detector with the first actual bandwidth parameter than to a change in bandwidth measured by the first optical bandwidth detector with the second actual bandwidth parameter; and

the second impulse response of the second optical bandwidth detector is more sensitive to a change in bandwidth measured by the second optical bandwidth detector with the second actual bandwidth parameter than to a change in bandwidth measured by the second optical bandwidth detector with the first actual bandwidth parameter.

**Patentansprüche**

1. Ein Bandbreitenmessgerät (10) zum Messen der Bandbreite eines Lichtspektrums (14), das von einem Laser emittiert und dem Bandbreitenmessgerät zugeführt wird, umfassend:

einen ersten optischen Bandbreitendetektor (30), der Licht von dem Laser empfängt und eine erste Gesamtbreite eines Interferenzstreifens bei einem Prozentsatz einer maximalen Intensität des empfangenen Lichts mißt, und als eine erste Ausgabe die gemessene erste Breite des Interferenzstreifens bereitstellt;

einen zweiten optischen Bandbreitendetektor (34), der Licht von dem Laser empfängt und eine zweite Gesamtbreite eines Interferenzstreifens bei einem Prozentsatz der maximalen Intensität des empfangenen Lichts mißt, und als eine zweite Ausgabe die gemessene zweite Breite des Interferenzstreifens bereitstellt; und

eine Vorrichtung (40) zur Berechnung eines tatsächlichen Bandbereitenparameters, die einen tatsächlichen Bandbreitenparameter berechnet, indem sie eine lineare Gleichung mit mehreren Variablen löst, die die erste Ausgabe und die zweite Ausgabe als Variablen enthält und vorberechnete Kalibrationskonstanten enthält, von denen jede entweder von dem ersten optischen Bandbreitendetektor oder von dem zweiten optischen Bandbreitendetektor abhängt, um einen tatsächlichen Bandbreitenparameter zu berechnen;
wobei der tatsächliche Bandbreitenparameter mindestens eines von einer Gesamtbreite eines Spektrums bei einem gewissen Prozentsatz der maximalen Intensität des von dem Laser emittierten Lichtspektrums und einer Breite zwischen zwei Punkten auf dem Spektrum, die einen Anteil des Spektrums, der einen gewissen Prozentsatz der Energie des gesamten von dem Laser emittierten Lichtspektrums enthält, festlegen, umfasst.

2. Das Bandbreitenmessgerät gemäß Anspruch 1, wobei:

der erste optische Bandbreitendetektor (30) ein Etalon ist; und
der zweite optische Bandbreitendetektor (34) ein Etalon ist.

3. Das Bandbreitenmessgerät gemäß Anspruch 1, wobei:

der tatsächliche Bandbreitenparameter einen ersten tatsächlichen Bandbreitenparameter und einen zweiten tatsächlichen Bandbreitenparameter umfasst;
der erste tatsächliche Bandbreitenparameter die Gesamtbreite des Spektrums bei einem gewissen Prozentsatz der maximalen Intensität des von dem Laser emittierten Lichtspektrums ist;
der zweite tatsächliche Bandbreitenparameter die Breite zwischen zwei Punkten auf dem Spektrum, die einen Anteil des Spektrums, der einen gewissen Prozentsatz der Energie des gesamten von dem Laser emittierten Lichtspektrums enthält, festlegen, ist;
der erste optische Bandbreitendetektor gegenüber einer Änderung der Bandbreite, die mit dem ersten tatsächlichen Bandbreitenparameter gemessen wird, empfindlicher ist als gegenüber einer Änderung der Bandbreite, die mit dem zweiten tatsächlichen Bandbreitenparameter gemessen wird; und
der zweite optische Bandbreitendetektor gegenüber einer Änderung der Bandbreite, die mit dem zweiten tatsächlichen Bandbreitenparameter gemessen wird, empfindlicher ist als gegenüber einer Änderung der Bandbreite, die mit dem ersten tatsächlichen Bandbreitenparameter gemessen wird.

4. Das Bandbreitenmessgerät gemäß Anspruch 3, wobei:

die vorberechneten Kalibrationskonstanten aus einer dreidimensionalen graphischen Darstellung, die die erste Ausgabe des ersten optischen Bandbreitendetektors (30) bezogen auf ein zum Kalibrieren zugeführtes Licht mit bekannten Werten des ersten tatsächlichen Bandbreitenparameters und des zweiten tatsächlichen Bandbreitenparameters darstellt, und aus einer dreidimensionalen graphischen Darstellung, die die zweite Ausgabe des zweiten optischen Bandbreitendetektors (34) bezogen auf ein zum Kalibrieren zugeführtes Licht mit bekannten Werten des ersten tatsächlichen Bandbreitenparameters und des zweiten tatsächlichen Bandbreitenparameters darstellt, hergeleitet sind.

5. Das Bandbreitenmessgerät gemäß Anspruch 4, wobei:

die erste dreidimensionale graphische Darstellung die folgende Lösung bereitstellt:

die erste Ausgabe = (a ∗ den bekannten Wert des ersten tatsächlichen Bandbreitenparameters, der mit dem ersten optischen Bandbreitendetektor bei dem zum Kalibrieren eingegebenen Licht aufgenommen wurde) + (b ∗ den bekannten Wert des zweiten tatsächlichen Bandbreitenparameters, der mit dem ersten optischen Bandbreitendetektor bei dem zum Kalibrieren eingegebenen Licht aufgenommen wurde) + c; und

die zweite dreidimensionale graphische Darstellung die folgende Lösung bereitstellt:

die zweite Ausgabe = (d * den bekannten Wert des ersten tatsächlichen Bandbereitenparameters, der mit dem zweiten optischen Bandbreitendetektor bei dem zum Kalibrieren eingegebenen Licht aufgenommen wurde) + (e * den bekannten Wert des zweiten tatsächlichen Bandbreitenparameters, der mit dem zweiten optischen Bandbreitendetektor bei dem zum Kalibrieren eingegebenen Licht aufgenommen wurde) + f;

und
die Vorrichtung zum Berechnen der tatsächlichen Bandbreite einen tatsächlichen Bandbreitenparameter unter Verwendung von einer von den beiden folgenden hergeleiteten Gleichungen berechnet:

der erste tatsächliche Bandbreitenparameter = ((b * (zweite Ausgabe)) – (e * (erste Ausgabe)) + ce – bf) / (bd – ae),

oder:

der zweite tatsächliche Bandbreitenparameter = ((a * (zweite Ausgabe)) – (d * (erste Ausgabe)) + cd – af) / (ae – bd);

wobei a, b, c, d, e und f die vorberechneten Kalibrationskonstanten darstellen.

6. Das Bandbreitenmessgerät gemäß Anspruch 5, wobei:

der bekannte Wert des ersten tatsächlichen Bandbreitenparameters eine Gesamtbreite des Spektrums bei der Hälfte der maximalen Intensität des Spektrums des zum Kalibrieren eingegebenen Lichts ist; und
der bekannte Wert des zweiten tatsächlichen Bandbreitenparameters eine Breite zwischen zwei Punkten auf dem Spektrum, die 95% der Energie des Spektrums des zum Kalibrierens eingegebenen Lichts enthält, ist.

7. Eine Lichtquelle für die Photolithographie, die umfasst:

einer Laserlichtquelle; und
ein Bandbreitenmessgerät (10) gemäß einem der Ansprüche 1 bis 6, wobei das Bandbreitenmessgerät (10) zum Messen der Bandbreite eines von der Laserlichtquelle emittierten Lichtspektrums (14) angeordnet ist.

8. Die Lichtquelle gemäß Anspruch 7, wobei das Bandbreitenmessgerät (10) die im Anspruch 9 definierten Merkmale umfasst, und die Lichtquelle außerdem umfasst, dass die Übertagungsfunktion des ersten optischen Bandbreitendetektors (30) so gewählt ist, dass er gegenüber einer Gesamtbreite des Spektrums bei einem gewissen Prozentsatz des Maximums wesentlich empfindlicher ist als gegenüber einem Teil, der einen gewissen Prozentsatz der Energie enthält, und die Übertragungsfunktion des zweiten optischen Bandbreitendetektors (34) so gewählt ist, dass er gegenüber einem Teil, der einen gewissen Prozentsatz der Energie enthält, wesentlich empfindlicher ist als gegenüber einer Gesamtbreite des Spektrums bei einem gewissen Prozentsatz des Maximums.

9. Ein Bandbreitenmessverfahren zum Messen der Bandbreite eines Lichtspektrums, das von einem Laser emittiert wird, wobei das Verfahren umfasst:

Empfangen von Licht von dem Laser an einem ersten optischen Bandbreitendetektor (30), der einen ersten Impulsgang hat;
Messen einer ersten Gesamtbreite eines Interferenzstreifens bei einem Prozentsatz einer maximalen Intensität eines Spektrums des empfangenen Lichts am ersten optischen Bandbreitendetektor;
Bereitstellen der gemessenen ersten Gesamtbreite eines Interferenzstreifens bei dem Prozentsatz der maximalen Intensität von dem ersten optischen Bandbreitendetektor als eine erste Ausgabe;

Empfangen von Licht von dem Laser an einem zweiten optischen Bandbreitendetektor (34), der einen zweiten Impulsgang hat;

Messen einer zweiten Gesamtbreite eines Interferenzstreifens bei einem Prozentsatz der maximalen Intensität des Spektrums des empfangenen Lichts an dem zweiten optischen Bandbreitendetektor;

Bereitstellen der gemessenen zweiten Gesamtbreite eines Interferenzstreifens bei dem Prozentsatz der maximalen Intensität von dem zweiten optischen Bandbreitendetektor als eine zweite Ausgabe;

Empfangen der ersten Ausgabe und der zweiten Ausgabe;

Empfangen von vorberechneten Kalibrationskonstanten, die entweder von dem ersten optischen Bandbreitendetektor oder dem zweiten optischen Bandbreitendetektor abhängen; und

Verwenden einer Vorrichtung (40) zum Berechnen einer tatsächlichen Bandbreite, die einen tatsächlichen Bandbreitenparameter berechnet, indem sie eine lineare Gleichung mit mehreren Variablen löst, die die erste Ausgabe und die zweite Ausgabe als Variablen enthält und die vorberechneten Kalibrationskonstanten enthält; wobei der tatsächliche Bandbreitenparameter mindestens eines von einer Gesamtbreite des Spektrums bei einem gewissen Prozentsatz des maximalen Intensität des von dem Laser emittierten Lichtspektrums und einer Breite zwischen zwei Punkten auf dem Spektrum, die einen Anteil des Spektrums, der einen gewissen Prozentsatz der Energie des gesamten von dem Laser emittierten Lichtspektrums enthält, festlegen, umfasst.

**10.** Das Verfahren gemäß Anspruch 9, wobei:

der tatsächliche Bandbreitenparameter einen ersten tatsächlichen Bandbreitenparameter und einen zweiten tatsächlichen Bandbreitenparameter umfasst;

wobei der erste tatsächliche Bandbreitenparameter die Gesamtbreite des Spektrums bei einem gewissen Prozentsatz der maximalen Intensität des Spektrums des von dem Laser emittierten Lichts ist;

der zweite tatsächliche Bandbreitenparameter die Breite zwischen zwei Punkten auf dem Spektrum, die einen Anteil des Spektrums, der einen gewissen Prozentsatz der Energie des gesamten Spektrums des von dem Laser emittierten Lichts enthält, festlegen, ist;

der erste Impulsgang des ersten optischen Bandbreitendetektors gegenüber einer Änderung der von dem ersten optischen Bandbreitendetektor gemessenen Bandbreite mit dem ersten tatsächlichen Bandbreitenparameter empfindlicher ist als gegenüber einer Änderung der von dem ersten optischen Bandbreitendetektor gemessenen Bandbreite mit dem zweiten tatsächlichen Bandbreitenparameter; und

wobei der zweite Impulsgang des zweiten optischen Bandbreitendetektors gegenüber einer Änderung der von dem zweiten optischen Bandbreitendetektor gemessenen Bandbreite mit dem zweiten tatsächlichen Bandbreitenparameter empfindlicher ist als gegenüber einer Änderung der von dem zweiten optischen Bandbreitendetektor gemessenen Bandbreite mit dem ersten tatsächlichen Bandbreitenparameter.

## Revendications

**1.** Appareil de mesure de largeur de bande (10) pour mesurer la largeur de bande d'un spectre de lumière (14) émise par un laser, appliquée à l'entrée de l'appareil de mesure de largeur de bande, comprenant :

un premier détecteur de largeur de bande optique (30) qui reçoit de la lumière du laser, qui mesure une première largeur complète de frange avec un pourcentage d'intensité maximale de la lumière reçue et qui fournit la première largeur de frange mesurée en tant que première sortie ;

un second détecteur de largeur de bande optique (34) qui reçoit de la lumière du laser, qui mesure une seconde largeur complète de frange avec un pourcentage d'intensité maximale de la lumière reçue et qui fournit la seconde largeur de frange mesurée en tant que seconde sortie ; et

un dispositif de calcul de largeur de bande réelle (40) qui calcule un paramètre de largeur de bande réelle en résolvant une équation linéaire à plusieurs variables incluant la première sortie et la seconde sortie en tant que variables et qui comporte des constantes d'étalonnage calculées à l'avance dépendant chacune, soit du premier détecteur de largeur de bande optique, soit du second détecteur de largeur de bande optique, pour calculer un paramètre de largeur de bande réelle ;

dans lequel le paramètre de largeur de bande réelle comporte au moins une largeur parmi la largeur du spectre complet pour un certain pourcentage de l'intensité maximale du spectre de lumière émise par le laser et une largeur entre deux points sur le spectre définissant un contenu du spectre contenant un certain pourcentage de l'énergie du spectre complet de la lumière émise par le laser.

**2.** Appareil de mesure de largeur de bande selon la revendication 1, dans lequel :

le premier détecteur de largeur de bande optique (30) est un étalon ; et
le second détecteur de largeur de bande optique (34) est un étalon.

3. Appareil de mesure de largeur de bande selon la revendication 1, dans lequel le paramètre de largeur de bande réelle comporte un premier paramètre de largeur de bande réelle et un second paramètre de largeur de bande réelle ; dans lequel le premier paramètre de largeur de bande réelle est constitué de ladite largeur du spectre complet pour un certain pourcentage de l'intensité maximale du spectre de lumière émise par le laser ; le second paramètre de largeur de bande réelle est constitué de ladite largeur entre deux points sur le spectre définissant un contenu du spectre contenant un certain pourcentage de l'énergie du spectre complet de la lumière émise par le laser ; le premier détecteur de largeur de bande optique est plus sensible à une variation de largeur de bande mesurée avec le premier paramètre de largeur de bande réelle qu'à une variation de largeur de bande mesurée avec le second paramètre de largeur de bande réelle ; et le second détecteur de largeur de bande optique est plus sensible à une variation de largeur de bande mesurée avec le second paramètre de largeur de bande réelle qu'à une variation de largeur de bande mesurée avec le premier paramètre de largeur de bande réelle.

4. Appareil de mesure de largeur de bande selon la revendication 3, dans lequel :

les constantes d'étalonnage calculées à l'avance sont déterminées à partir d'un tracé tridimensionnel représentant la première sortie du premier détecteur de largeur de bande optique (30) en relation avec une lumière d'entrée d'étalonnage avec des valeurs connues du premier paramètre de largeur de bande réelle et du second paramètre de largeur de bande réelle, et à partir d'un tracé tridimensionnel représentant la seconde sortie du second détecteur de largeur de bande optique (34) en relation avec une lumière d'entrée d'étalonnage avec des valeurs connues du premier paramètre de largeur de bande réelle et du second paramètre de largeur de bande réelle.

5. Appareil de mesure de largeur de bande selon la revendication 4, dans lequel :

le premier tracé tridimensionnel fournit la solution suivante :

```
première sortie = (a*valeur connue du premier
paramètre de largeur de bande réelle prélevée avec le
premier détecteur de largeur de bande optique pour la
lumière d'entrée d'étalonnage) + (b*valeur connue du
second paramètre de largeur de bande réelle prélevée
avec le premier détecteur de largeur de bande optique
pour la lumière d'entrée d'étalonnage) + c ;
```

et
le second tracé tridimensionnel fournit la solution suivante :

```
seconde    sortie = (d*valeur    connue    du    premier
paramètre de largeur de bande réelle prélevée avec le
second détecteur de largeur de bande optique pour la
lumière d'entrée d'étalonnage) + (e*valeur connue du
second paramètre de largeur de bande réelle prélevée
avec le second détecteur de largeur de bande optique
pour la lumière d'entrée d'étalonnage) + f ;
```

et
le dispositif de calcul de largeur de bande réelle calcule un paramètre de largeur de bande réelle en utilisant l'une ou l'autre des équations dérivées suivantes :

```
premier    paramètre    de    largeur    de    bande
réelle = ((b*(seconde           sortie)) - (e*(première
sortie)) + ce-bf)/(bd-ae),
```

ou :

```
second    paramètre    de    largeur    de    bande
réelle = ((a*seconde           sortie)) - (d*(première
sortie)) + cd-af)/(ae-bd) ;
```

dans lequel a, b, c, d, e et f représentent les constantes d'étalonnage calculées à l'avance.

6.  Appareil de mesure de largeur de bande selon la revendication 5, dans lequel :

la valeur connue du premier paramètre de largeur de bande réelle est la largeur du spectre complet à la moitié de l'intensité maximale du spectre de la lumière d'entrée d'étalonnage ; et
la valeur connue du second paramètre de largeur de bande réelle est une largeur entre deux points du spectre contenant 95 % de l'énergie du spectre de la lumière d'entrée d'étalonnage.

7.  Source de lumière pour photolitographie comprenant :

une source de lumière laser ; et
un appareil de mesure de largeur de bande (10) selon l'une quelconque des revendications 1 à 6, l'appareil de mesure de largeur de bande (10) étant agencé pour mesurer la largeur de bande d'un spectre de lumière (14) émise par ladite source de lumière laser.

8.  Source de lumière selon la revendication 7, dans laquelle l'appareil de mesure de largeur de bande (10) comprend les caractéristiques définies dans la revendication 9, la source de lumière comprenant en outre :

la fonction de transfert du premier détecteur de largeur de bande optique (30) qui est sélectionnée de manière à être beaucoup plus sensible à une largeur du spectre complet pour un certain pourcentage du maximum qu'une partie contenant un certain pourcentage de l'énergie et la fonction de transfert du second détecteur de largeur de bande optique (34) qui est sélectionnée de manière à être beaucoup plus sensible à une partie contenant un certain pourcentage de l'énergie qu'à une largeur du spectre complet pour un certain pourcentage du maximum.

9. Procédé de mesure de largeur de bande pour mesurer la largeur de bande d'un spectre de lumière émise par un laser, le procédé comprenant :

la réception de la lumière du laser sur un premier détecteur de largeur de bande optique (30) ayant une première réponse impulsionnelle ;
la mesure au niveau du premier détecteur de largeur de bande optique d'une première largeur complète de frange avec un pourcentage de l'intensité maximale du spectre de la lumière reçue ;
la fourniture en tant que première sortie de la première largeur complète de frange mesurée avec le pourcentage de l'intensité maximale provenant du premier détecteur de largeur de bande optique ;
la réception de la lumière du laser sur un second détecteur de largeur de bande optique (34) ayant une seconde réponse impulsionnelle ;
la mesure au niveau du second détecteur de largeur de bande optique d'une seconde largeur complète de frange avec un pourcentage de l'intensité maximale du spectre de la lumière reçue ;
la fourniture en tant que seconde sortie de la seconde largeur complète de frange mesurée avec le pourcentage de l'intensité maximale provenant du second détecteur de largeur de bande optique ;
la réception de la première sortie et de la seconde sortie ;
la réception de constantes d'étalonnage calculées à l'avance dépendant chacune, soit du premier détecteur de largeur de bande optique, soit du second détecteur de largeur de bande optique ; et
l'utilisation d'un dispositif de calcul de largeur de bande réelle (40) qui calcule un paramètre de largeur de bande réelle en résolvant une équation linéaire à plusieurs variables incluant la première sortie et la seconde sortie en tant que variables et comportant les constantes d'étalonnage calculées à l'avance ;
dans lequel le paramètre de largeur de bande réelle comporte au moins une largeur parmi la largeur du spectre complet pour un certain pourcentage de l'intensité maximale du spectre de lumière émise par le laser et une largeur entre deux points sur le spectre définissant un contenu du spectre contenant un certain pourcentage de l'énergie du spectre complet de la lumière émise par le laser.

10. Procédé selon la revendication 9, dans lequel le paramètre de largeur de bande réelle comporte un premier paramètre de largeur de bande réelle et un second paramètre de largeur de bande réelle ;
dans lequel le premier paramètre de largeur de bande réelle est constitué de ladite largeur du spectre complet pour un certain pourcentage de l'intensité maximale du spectre de lumière émise par le laser ;
le second paramètre de largeur de bande réelle est constitué de ladite largeur entre deux points sur le spectre définissant un contenu du spectre contenant un certain pourcentage de l'énergie du spectre complet de la lumière émise par le laser ;
la première réponse impulsionnelle du premier détecteur de largeur de bande optique est plus sensible à une variation de largeur de bande mesurée par le premier détecteur de largeur de bande optique avec le premier paramètre de largeur de bande réelle qu'à une variation de largeur de bande mesurée par le premier détecteur de largeur de bande optique avec le second paramètre de largeur de bande réelle ; et
la seconde réponse impulsionnelle du second détecteur de largeur de bande optique est plus sensible à une variation de largeur de bande mesurée par le second détecteur de largeur de bande optique avec le second paramètre de largeur de bande réelle qu'à une variation de largeur de bande mesurée par le second détecteur de largeur de bande optique avec le premier paramètre de largeur de bande réelle.

Avg Behavior of D79 (28-36)/380 kPa
Correlation gridding, WM5645 ultralow wedge etalon

Data: Data2_D79
Model: 3Dplane
Equation: A*x + B*y + C
Weighting:
Z            No weighting

$Chi^2/DoF$ = 0.00008
$R^2$       = 0.89623

A  0.64495  ±0.0166
B  0.20797  ±0.01105
C  0.22983  ±0.00719

# FIG. 1

SAM Tracking Simulation 0.12 pm/20 pixel Bandpass

Data: Data5_SAM
Model: 3Dplane
Equation: A*x + B*y + C
Weighting:
Z        No weighting

Chi^ 2/DoF  = 7.8249E-6
R^ 2        = 0.95716

A  0.66704  ±0.00221
B  0.08951  ±0.00079
C  0.10172  ±0.00039

FIG. 2

HiRes LAM Tracking Simulation 0.7 pm/20 pixel Bandpass

Data:  Data5_HRLAM
Model:  3Dplane
Equation:  A*x + B*y + C
Weighting:
Z        No weighting

Chi^ 2/DoF  =  2.0666E-6
R^ 2        =  0.97507

A  0.14483  ±000114
B  0.16575  ±0.00041
C  0.67263  ±0.0002

# FIG. 3

# FIG. 4

FWHM TRACKING OF SIMULATED WAVEMETER

WAVEMETER FWHM (pm)

LTB DFWHM (pm)

● EC SAM (mean value EC)
▲ SAM + HR-LAM
— Perfect tracking

SAM: 0.12 pm FWHM bandpass
20 pixels in FWHM
800 pixel inspection range

HRLAM: 0.70 pm FWHM bandpass
20 pixels in FWHM
800 pixel inspection range

6 pilot XLA-130 lasers
4814 spectra from Bandwidth Resonance scans

FIG. 5

## FWHM TRACKING ERROR OF SIMULATED WAVEMETER

TRACKING RESIDUALS EC SAM VARIANCE = 7.9 fm

TRACKING RESIDUALS SAM + HR LAM VARIANCE = 3.9 fm

SAM:  0.12 pm FWHM bandpass
20 pixels in FWHM
800 pixel inspection range

HRLAM:  0.70 pm FWHM bandpass
20 pixels in FWHM
800 pixel inspection range

6 pilot XLA-130 lasers
4814 spectra from Bandwidth Resonance scans

# FIG. 6

## E95% TRACKING OF SIMULATED WAVEMETER

WAVEMETER E95% WIDTH (pm) vs LTB DE95% WIDTH (pm)

● SAM + HR-LAM
— PERFECT TRACKING

SAM: 0.12 pm FWHM bandpass
20 pixels in FWHM
800 pixel inspection range

HRLAM: 0.70 pm FWHM bandpass
20 pixels in FWHM
800 pixel inspection range

6 pilot XLA-130 lasers
4814 spectra from Bandwidth Resonance scans

# FIG. 7

E95 TRACKING ERROR OF SIMULATED WAVEMETER

▨ TRACKING RESIDUALS SAM + HR LAM VARIANCE = 7.3 fm

SAM: 0.12 pm FWHM bandpass
20 pixels in FWHM
800 pixel inspection range

HRLAM: 0.70 pm FWHM bandpass
20 pixels in FWHM
800 pixel inspection range

6 pilot XLA-130 lasers
4814 spectra from Bandwidth Resonance scans

# FIG. 8

NORMALIZED CONVOLVED FRINGE-WIDTH
EXCESS FOR VARIOUS INPUT SPECTRA

0.12 pm FWHM CIRCUIT ● 0.70 pm FWHM CIRCUIT

FIG. 9

NORMALIZED CONVOLVED FRINGE-WIDTH EXCESS FOR VARIOUS INPUT SPECTRA, PLANE APPROXIMATION

FIG. 10

EP 1 649 244 B1

**EP 1 649 244 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5970076 A
- US 6317448 B
- US 6580517 B